# EUROPEAN PATENT APPLICATION

(11) **EP 3 725 605 A1**
(43) Date of publication of application: **21.10.2020**
(21) Application number: 18887952.2
(22) Date of filing: 28.11.2018
(51) Int. Cl.: B60S 5/06

(54) **BATTERY CHARGING AND REPLACEMENT STATION**

(30) Priority: 15.12.2017 CN 201711353847
(71) Applicant: Nio Nextev Limited, Hong Kong (CN)
(72) Inventor: ZHAO, Zhiling, Shanghai 201804 (CN); YANG, Chao, Shanghai 201804 (CN); LAI, Jianwen, Shanghai 201804 (CN); YAN, Bingyong, Shanghai 201804 (CN)
(74) Representative: Vossius & Partner Patentanwälte Rechtsanwälte mbB
(86) International application number: PCT/CN2018/117845
(87) International publication number: WO 2019/114546

(57) **Abstract**

Disclosed is a battery charging and swapping station, which aims to solve problems of complicated configurations and poor battery swap experience in existing battery charging and swapping stations. The battery charging and swapping station comprises: a battery swap platform (1), which is erected on the ground where the battery charging and swapping station is located, and which is able to position a vehicle parked thereon; a battery storage device (2), which stores a plurality of batteries, and which is able to dock with and exchange a battery with a battery transfer device (3); the battery transfer device (3), which is able to dock with a battery swap trolley (4), and to transfer a fresh battery to the battery swap trolley (4) immediately after receiving a used battery from the battery swap trolley (4); and the battery swap trolley (4), which is able to carry a battery to move between an area below the battery swap platform (1) and the battery transfer device (3), and to swap a battery for the vehicle in the area below the battery swap platform (1). The battery charging and swapping station enables a battery to be swapped without lifting a vehicle, so that the mechanism configuration of the battery charging and swapping station is simplified, and the battery swap experience is improved.

## Description

### Technical Field

The invention relates to the field of battery swapping, and in particular to a battery charging and swapping station.

### Background Art

With the popularization of new energy vehicles, how to effectively provide rapid and effective energy replenishment for vehicles with insufficient energy has become a very concerned problem for vehicle owners and major manufacturers. Taking electric vehicles as an example, the current mainstream electric energy replenishment solutions include a charging solution and a battery swapping solution. Compared with the charging solution, the battery swapping solution can swap a traction battery in a very short time and does not significantly affect the service life of the traction battery, and is therefore one of the main development directions of electric energy replenishment. The battery swapping solution is generally completed in a battery charging and swapping station. The battery charging and swapping station is internally provided with a battery rack for storing batteries and a battery swap platform as well as a battery swap trolley, such as a Rail Guided Vehicle (RGV), for carrying fresh/used traction batteries between the battery rack and the battery swap platform. The battery swap trolley implements the transportation of the battery and the swapping of a battery of the electric vehicle by means of reciprocating between the battery rack and the battery swap platform.

Although the battery swapping solution has many advantages mentioned above, certain problems inevitably exist. Since two functions of transportation and swapping of the traction battery are integrated in the existing battery swap trolley, the battery swap trolley is usually set relatively high in the height direction. Correspondingly, the battery swap platform needs to be equipped with a dedicated lifting device to raise the electric vehicle to a higher height before the battery swap trolley enters an area below the vehicle for battery swapping, to prevent the battery swap trolley from interfering with the electric vehicle when entering the area below the vehicle and thus damaging the electric vehicle. Obviously, such an arrangement complicates the mechanism configuration of the battery charging and swapping station and increases the construction and operating costs of the battery charging and swapping station. Moreover, since the lifting device needs to lift the electric vehicle to a higher position, for safety reasons, during the battery swapping, the driver (a passenger or a battery swap service personnel) needs to park the vehicle, gets off the vehicle and waits until the end of the battery swap process, and then gets on the vehicle and drives same away. This process is proper for safety reasons, but results in a very poor user experience. That is to say, the existing battery charging and swapping stations have the problems of complicated mechanism configurations and poor battery swap experience.

Accordingly, there is a need in the art for a novel battery charging and swapping station to solve the above problems.

### Summary of the Invention

To solve the above problems in the prior art, that is, to solve the problems of complicated mechanism configurations and poor battery swap experience in the existing battery charging and swapping stations, the invention provides a battery charging and swapping station, comprising a battery swap platform, a battery storage device, a battery transfer device and a battery swap trolley, wherein the battery swap platform is erected on the ground where the battery charging and swapping station is located, and the battery swap platform is configured to position a vehicle parked thereon; the battery storage device stores a plurality of batteries, and the battery storage device is configured to dock with and exchange a battery with the battery transfer device; the battery transfer device is configured to dock with the battery swap trolley, and to transfer a fresh battery to the battery swap trolley after receiving a used battery from the battery swap trolley; and the battery swap trolley is configured to carry a battery to move between an area below the battery swap platform and the battery transfer device, and to swap a battery for the vehicle in the area below the battery swap platform.

In the above preferred technical solution of the battery charging and swapping station, the battery transfer device comprises a battery lifting unit and two first battery transfer units, wherein the battery lifting unit is configured to enable the at least one first battery transfer unit to ascend/descend, and the two first battery transfer units are configured such that while or after one of the first battery transfer units receives/transfers the used battery, the other of the first battery transfer units is able to correspondingly transfer/receive the fresh battery.

In the above preferred technical solution of the battery charging and swapping station, the battery lifting unit comprises a first driving mechanism and a first transmission mechanism, wherein the first driving mechanism is able to drive the first transmission mechanism to ascend/descend, and the first transmission mechanism is connected to the at least one first battery transfer unit.

In the above preferred technical solution of the battery charging and swapping station, the first battery transfer unit comprises a second driving mechanism and a second transmission mechanism, wherein the second driving mechanism is able to drive the second transmission mechanism to move, and the second transmission mechanism is able to carry the battery.

In the above preferred technical solution of the battery charging and swapping station, the battery swap trolley comprises a body, and a second battery transfer unit and a locking/unlocking unit provided on the body, wherein the second battery transfer unit is configured to move the battery relative to the body, and the locking/unlocking unit is configured to swap the battery for the vehicle at a battery swap position.

In the above preferred technical solution of the battery charging and swapping station, the second battery transfer unit comprises a third driving mechanism and a third transmission mechanism, wherein the third driving mechanism is able to drive the third transmission mechanism to move, and the third transmission mechanism is able to carry the battery.

In the above preferred technical solution of the battery charging and swapping station, the locking/unlocking unit comprises a hoisting mechanism and a locking/unlocking mechanism, wherein the hoisting mechanism is able to hoist the locking/unlocking mechanism to the battery swap position, and the locking/unlocking mechanism is able to lock/unlock the battery at the battery swap position.

In the above preferred technical solution of the battery charging and swapping station, the battery swap trolley is further provided with a walking unit, a track rail is laid between the area below the battery swap platform and the battery transfer device, and the walking unit is configured to drive the battery swap trolley to move on the track rail.

In the above preferred technical solution of the battery charging and swapping station, the battery swap platform is provided with a battery swap port configured to allow the locking/unlocking unit of the battery swap trolley to pass therethrough and reach the battery swap position.

In the above preferred technical solution of the battery charging and swapping station, a closable door is further provided at the battery swap port, and the closable door is configured to be opened before the battery swap trolley reaches the battery swap position.

In the above preferred technical solution of the battery charging and swapping station, the battery swap platform is provided with a first positioning mechanism and a second positioning mechanism, wherein the first positioning mechanism enables the vehicle to be positioned in a forward/backward direction, and the second positioning mechanism enables the vehicle to be positioned in a width direction.

In the above preferred technical solution of the battery charging and swapping station, the first positioning mechanism comprises a set of V-shaped rollers and a set of I-shaped rollers, wherein the set of V-shaped rollers enables front/rear wheels of the vehicle to be embedded therein, and the set of V-shaped rollers allows the front/rear wheels of the vehicle to move in the width direction of the vehicle; and the set of I-shaped rollers respectively allows the rear/front wheels of the vehicle to be supported thereon and to move in the width direction of the vehicle.

In the above preferred technical solution of the battery charging and swapping station, the second positioning mechanism comprises a front wheel centring push/pull rod and/or a rear wheel centring push/pull rod, wherein the front wheel centring push/pull rod and/or the rear wheel centring push/pull rod enable the vehicle to be positioned in the width direction of the vehicle by means of pushing/pulling the front/rear wheels of the vehicle.

In the above preferred technical solution of the battery charging and swapping station, the battery storage device further comprise a plurality of battery rack units, wherein each of the battery rack units is provided with a third battery transfer unit, and the third battery transfer unit is configured to enable the battery to enter/exit the battery rack unit.

In the above preferred technical solution of the battery charging and swapping station, the third battery transfer unit comprises a fourth driving mechanism and a fourth transmission mechanism, wherein the fourth driving mechanism is able to drive the fourth transmission mechanism to move, and the fourth transmission mechanism is able to carry the battery.

In the above preferred technical solution of the battery charging and swapping station, the battery swap platform is further provided with a levelling unit configured adjust a degree of parallelism between the vehicle and the battery swap platform.

In the above preferred technical solution of the battery charging and swapping station, the levelling unit comprises a plurality of fifth driving mechanisms and a plurality of fifth transmission mechanisms provided in the area below the battery swap platform, wherein each of the fifth driving mechanisms is able to drive the corresponding fifth transmission mechanism to ascend/descend, and the fifth transmission mechanism is able to extend out of the battery swap port and abut against a chassis of the vehicle.

It can be understood by those skilled in the art that in a preferred technical solution of the invention, a battery charging and swapping station comprises a battery swap platform, a battery storage device, a battery transfer device and a battery swap trolley. The battery swap platform is erected on the ground where the battery charging and swapping station is located, and the battery swap platform is configured to position a vehicle parked thereon; the battery storage device stores a plurality of batteries, and the battery storage device is configured to dock with and exchange a battery with the battery transfer device; the battery transfer device is configured to dock with the battery swap trolley, and to transfer a fresh battery immediately to the battery swap trolley after receiving a used battery from the battery swap trolley; and the battery swap trolley is configured to carry a battery to move between an area below the battery swap platform and the battery transfer device, and to swap a battery for the vehicle in the area below the battery swap platform. The battery charging and swapping station of the invention can perform the battery swapping without lifting the vehicle by means of the arrangement in which the battery swap platform is erected on the ground where the battery charging and swapping station is located, to leave a movement space in the area below the battery swap platform, and in turn the battery swap trolley can swap the battery for the vehicle in the area below the battery swap platform. Such an arrangement not only omits the vehicle lifting process during the battery swapping to speed up the cycle of battery swapping so that the driver can complete the battery swapping of the vehicle without getting off the vehicle, but can also greatly simplify the structure of the battery charging and swapping station to reduce the construction cost of the battery charging and swapping station. That is to say, the battery charging and swapping station of the invention solves the problems of complicated mechanism configurations and poor battery swap experience in the existing battery charging and swapping stations, and improves the battery swap efficiency and the battery swap experience.

Further, the battery transfer device comprises a battery lifting unit and two first battery transfer units. The two first battery transfer units are configured such that while or after one of the first battery transfer units receives/transfers the used battery, the other of the first battery transfer units is able to respectively transfer/receive the fresh battery. By providing two first battery transfer units on the battery transfer device, the battery transfer device can store two batteries at the same time. In this way, during the battery swapping, the battery transfer device complete the reception of the used battery and transfer of the fresh battery in a single operation, thus further speeding up the cycle of battery swapping.

### Brief Description of the Drawings

The battery charging and swapping station of the invention will be described below with reference to accompanying drawings and in conjunction with electric vehicles. In the accompanying drawings:
Fig. 1 is a schematic top view of a battery charging and swapping station of the invention;
Fig. 2 is a schematic front view of the battery charging and swapping station of the invention;
Fig. 3 is a schematic structural view of a battery transfer device of the invention;
Fig. 4 is a schematic structural view of a battery storage device of the invention;
Fig. 5 is a partially enlarged schematic view of a battery swap platform of the invention;
Fig. 6 is a schematic structural view of a centring push/pull rod of the invention;
Fig. 7 is a schematic structural view of a battery swap trolley of the invention;
Fig. 8 is a schematic view (I) of a hoisting process of a hoisting mechanism of a battery swap robot of the invention;
Fig. 9 is a schematic view (II) of the hoisting process of the hoisting mechanism of the battery swap robot of the invention; and
Fig. 10 is a schematic structural view of a levelling unit of the invention.

### List of Reference Signs

1. Battery swap platform; 11. Battery swap port; 12. closable door; 13. First positioning mechanism; 131. Set of V-shaped rollers; 132. Set of I-shaped rollers; 141. Centring push/pull rod; 15. Levelling unit; 151. Fifth driving mechanism; 152. Fifth transmission mechanism; 2. Battery storage device; 21. Battery rack unit; 22. Third battery transfer unit; 221. Fourth driving mechanism; 222. Fourth transmission mechanism; 3. Battery transfer device; 31. Battery lifting unit; 311. First driving mechanism; 312. First transmission mechanism; 32. First battery transfer unit; 4. Battery swap trolley; 41. Body; 42. Second battery transfer unit; 421. Third transmission mechanism; 431. Bottom plate; 432. Hoisting mechanism; 433. Locking/unlocking mechanism; 5. Frame structure.

### Detailed Description of Embodiments

Preferred embodiments of the invention are described below with reference to the accompanying drawings. It should be understood by those skilled in the art that these embodiments are only for explaining the technical principles of the invention and are not intended to limit the scope of protection of the invention. For example, although two first battery transfer units of a battery transfer device are arranged one above the other in the drawings, such an arrangement is not invariable, those skilled in the art can adjust same according to requirements so as to adapt to specific application scenarios. For example, the two first battery transfer units may also be arranged in parallel in the left-right direction.

It should be noted that in the description of the invention, the terms, such as "centre", "upper", "lower", "left", "right", "vertical", "horizontal", "inner" and "outer", that indicate directions or positional relationships are based on the directions or positional relationships shown in the drawings only for convenience of description, and do not indicate or imply that the device or element must have a specific orientation, be constructed and operated in a specific orientation, and therefore cannot be understood as limitation to the invention. In addition, the terms "first", "second" and "third" are for descriptive purposes only and should not be construed as indicating or implying relative importance.

In addition, it should also be noted that, in the description of the invention, the terms "mount", "engage" and "connect" should be interpreted in a broad sense unless explicitly defined and limited otherwise, which, for example, can mean a fixed connection, a detachable connection or an integral connection; can mean a mechanical connection or an electrical connection; and can mean a direct connection, an indirect connection by means of an intermediary, or internal communication between two elements. For a person skilled in the art, the specific meaning of the above terms in the invention can be interpreted according to the specific situation.

To solve the problems of problems of complicated mechanism configurations and poor battery swap experience in the existing battery charging and swapping stations, the invention implements a battery charging and swapping station having simplified mechanisms by means of the arrangement in which a battery swap platform is erected and a battery swap trolley completes the battery swapping in an area below the battery swap platform, thereby speeding up the cycle of battery swapping, and improving the battery swap experience.

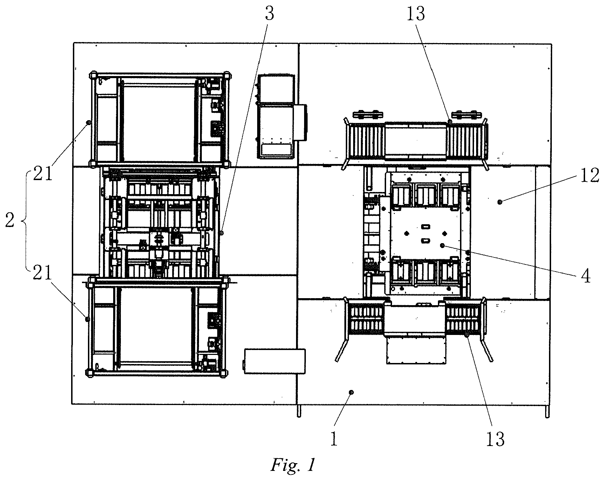

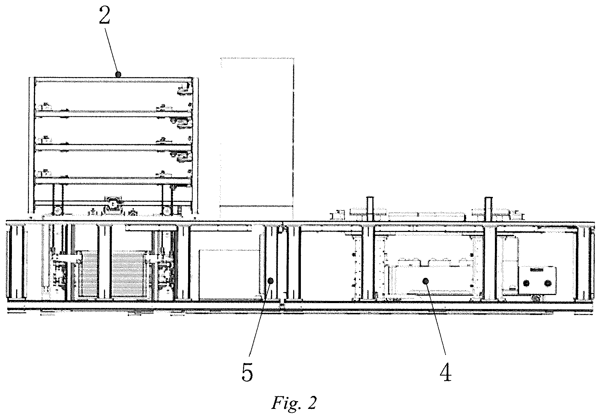

Reference is first made to Figs. 1 and 2, wherein Fig. 1 is a schematic top view of a battery charging and swapping station of the invention; and Fig. 2 is a schematic front view of the battery charging and swapping station of the invention.

As shown in Fig. 1, the battery charging and swapping station of the invention mainly comprises a battery swap platform 1, a battery storage device 2, a battery transfer device 3, and a battery swap trolley 4. The battery swap platform 1 is erected on the ground where the battery charging and swapping station is located, and the battery swap platform 1 is configured to position a vehicle parked thereon. The battery storage device 2 stores a plurality of batteries, and the battery storage device is configured to charge, discharge, and cool the batteries stored thereon, and to dock with and exchange a battery with the battery transfer device 3. The battery transfer device 3 is configured to dock with the battery swap trolley 4, and to transfer a fresh battery to the battery swap trolley 4 after receiving a used battery from the battery swap trolley 4. The battery swap trolley 4 is configured to carry a battery to move between an area below the battery swap platform 1 and the battery transfer device 3, and to swap a battery for the vehicle in the area below the battery swap platform 1.

By way of example, the battery swap platform 1 and the battery storage device 2 are provided at two ends of the battery charging and swapping station, the battery transfer device 3 is provided beside the battery storage device 2 and exchange a battery with the battery storage device 2, the battery swap platform 1 may be erected, via a frame structure 5, on the ground where the battery charging and swapping station is located, the battery swap platform 1 is then at a certain distance from the ground where the battery charging and swapping station is located, and the distance forms a movement space, which is enough for the battery swap trolley 4 to move back and forth between the area below the battery swap platform 1 and the battery transfer device 3. When swapping a battery for an electric vehicle (hereinafter referred to as a vehicle or an automobile) parked on battery swap platform 1, there is no need to lift the vehicle. Rather, the vehicle is directly driven to battery swap platform 1 through a gentle slope. The battery swap trolley 4 removes the used battery in the area below the battery swap platform 1, and transports the used battery to a battery transfer mechanism and docks therewith. The battery swap trolley 4 transfers the used battery to the battery transfer mechanism, and the battery transfer mechanism directly transfers a fresh battery to the battery swap trolley 4 after receiving the used battery. After receiving the fresh battery, battery swap trolley 4 carries the fresh battery and moves to the area below the battery swap platform 1 again, and installs the fresh battery to the electric vehicle, to complete the battery swapping for the electric vehicle.

As can be seen from the above description, the battery charging and swapping station of the invention can complete the battery swapping without lifting the vehicle by means of the arrangement in which the battery swap platform 1 is erected on the ground where the battery charging and swapping station is located, to leave a movement space in the area below the battery swap platform 1, in turn the battery swap trolley 4 can swap the battery for the vehicle in the area below the battery swap platform, and the battery transfer mechanism 3 directly transfers the fresh battery to the battery swap trolley 4 after receiving the used battery. Such an arrangement not only omits the vehicle lifting process during the battery swapping to speed up the cycle of battery swapping so that the driver can complete the battery swapping of the vehicle without getting off the vehicle, but can also greatly simplify the structure of the battery charging and swapping station, that is, simplify the configuration of a vehicle lifting mechanism, so that the overall layout rigidity of the battery charging and swapping station is increased and the structural stability is improved. In other words, the above arrangement not only reduces the construction cost of the battery swap station, but also improves the battery swap stability and the battery swap efficiency, thereby solving the problems of complicated configurations and poor battery swap experience in the existing battery charging and swapping stations, and improving the battery swap efficiency and the battery swap experience.

It should be noted that, the above-mentioned configuration is only intended to explain the principles of the invention, and is not intended to limit the scope of protection of the invention. and adjustments may be made by those skilled in the art to the above-mentioned configuration to adapt to more specific application scenarios without departing from the principles of the invention. For example, the battery swap platform 1 may also be erected on the ground where the battery charging and swapping station is located by using a steel structure, and the battery storage device 2 may also be used only to store batteries without charging and discharging functions.

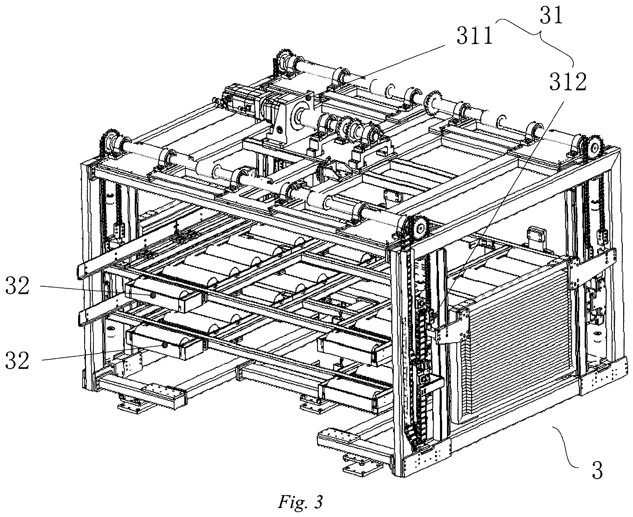

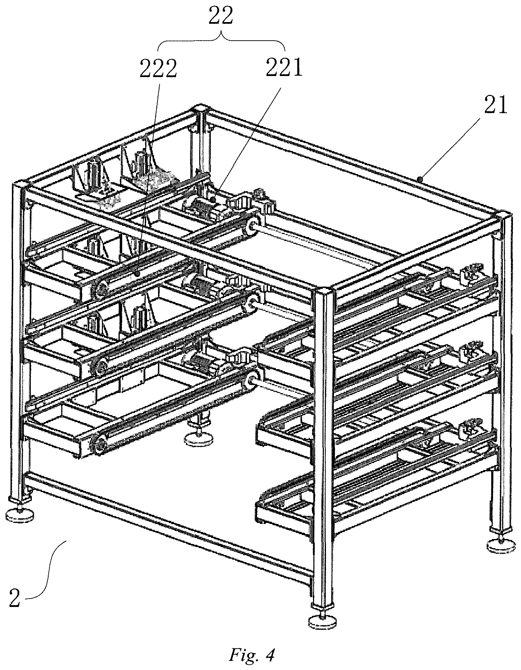

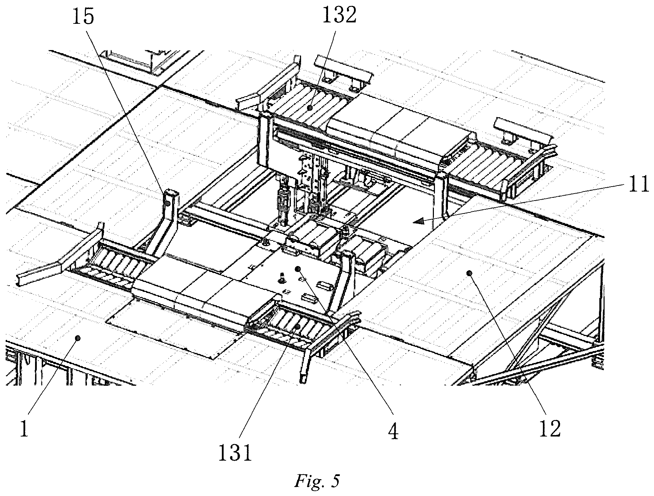

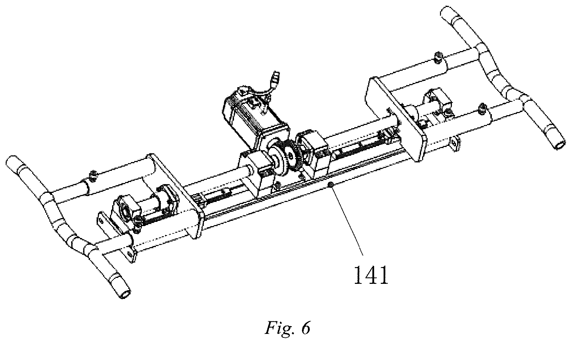

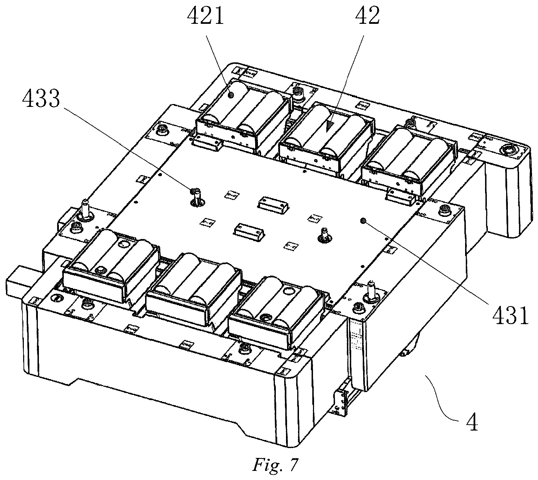

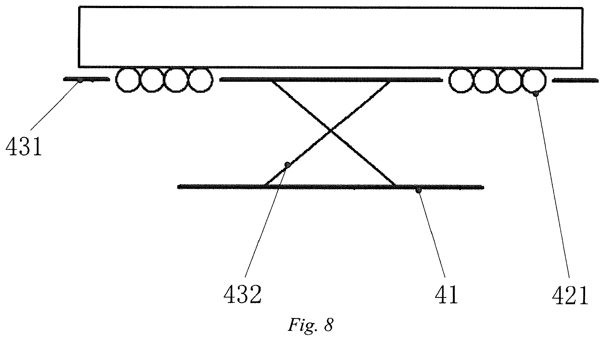

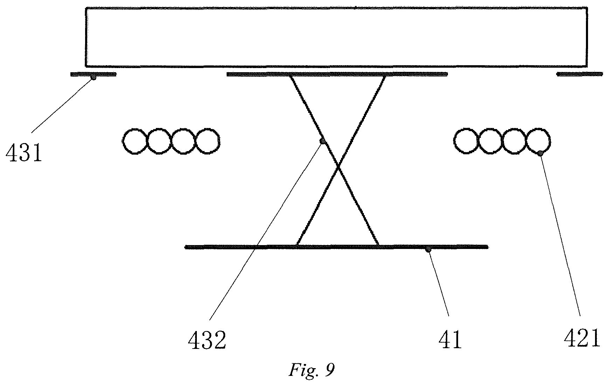

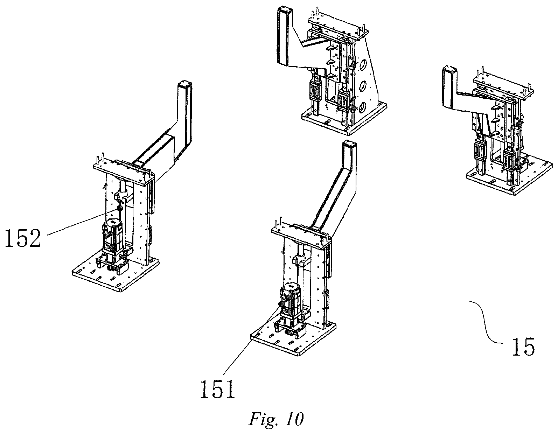

The principle of the invention is further illustrated below with reference to Figs. 1 to 10, wherein Fig. 3 is a schematic structural view of a battery transfer device of the invention; Fig. 4 is a schematic structural view of a battery storage device of the invention; Fig. 5 is a partially enlarged schematic view of a battery swap platform of the invention; Fig. 6 is a schematic structural view of a centring push/pull rod of the invention; Fig. 7 is a schematic structural view of a battery swap trolley of the invention; Fig. 8 is a schematic view (I) of a hoisting process of a hoisting mechanism of a battery swap robot of the invention; Fig. 9 is a schematic view (II) of the hoisting process of the hoisting mechanism of the battery swap robot of the invention; and Fig. 10 is a schematic structural view of a levelling unit of the invention.

As shown in Figs. 1 and 3, in a possible embodiment, the battery transfer device 3 comprises a battery lifting unit 31 and at least one first battery transfer unit 32. The battery lifting unit 31 is configured to enable the at least one first battery transfer unit 32 to ascend/descend, and the first battery transfer unit 32 is configured to swap the battery with the battery storage device 2 and the battery swap trolley 4. Specifically, the battery lifting unit 31 comprises a first driving mechanism 311 and a first transmission mechanism 312. The first driving mechanism 311 can drive the first transmission mechanism 312 to ascend/descend, and the first transmission mechanism 312 is directly or indirectly connected to the at least one first battery transfer unit 32. The first battery transfer unit 32 comprises a second driving mechanism (not shown) and a second transmission mechanism (not shown). The second driving mechanism can drive the second transmission mechanism to move, and the second transmission mechanism can carry the battery, which realizes the function of the battery entering/exiting the battery transfer device 3 for swapping the battery with the battery transfer device 3. In order to ensure the unity of components and facilitate maintenance and swapping, the battery lifting unit 31 and the battery transfer unit here may still use an existing standard apparatus such as a motor, an electric cylinder and an air cylinder as the first driving mechanism 311 or the second driving mechanism, and take a traditional form of a lead screw nut, a guide rail, a chain, etc. as the first transmission mechanism 312 or the second transmission mechanism, so as to lift and lower the battery and exchange the battery with a battery transportation unit and the battery storage device 2.

In a more preferred embodiment, the battery transfer device 3 may be provided with two first battery transfer units 32 arranged one above another or in left and right rows side by side, and the two battery transfer units are configured such that while or after one of the battery transfer units receives/transfers the used battery, the other one of the battery transfer units can transfer/receive the fresh battery. The battery transfer units are arranged one above another or in left and right rows side by side such that the battery transfer unit 3 may store two batteries simultaneously. In this way, during the battery swapping, the battery transfer device 3 may complete reception of the used battery and transfer of the fresh battery in a single operation, thus further speeding up the cycle of battery swapping.

Referring to Figs. 1, 2 and 4, the battery storage device 2 further comprises a plurality of battery rack units 21, such as a plurality of battery rack units 21 stacked longitudinally next to the battery transfer device 3 or on the frame structure 5 at the same level as the battery swap platform 1. A third battery transfer unit 22 is provided on the battery rack unit 21. The third battery transfer unit 22 comprises a fourth driving mechanism 221 and a fourth transmission mechanism 222. The fourth driving mechanism 221 can drive the fourth transmission mechanism 222 to move, and the fourth transmission mechanism 222 can carry the battery, and then realize the function of the battery entering/exiting the battery rack unit 21, so as to complete the exchange of the battery with the battery transfer device 3. In the implementation, each of the battery rack units 21 may be implemented in a modular arrangement, and the capacity of the battery storage unit may be increased by the addition of layers and rows, so as to meet more frequent battery swap requirements and more storage requirements. The fourth driving mechanism 221 may still take the form of a motor, an electric cylinder, an air cylinder etc., and the fourth transmission mechanism 222 takes the form of a lead screw nut, a guide rail, a chain, a set of roller wheels, and a set of rollers, etc., in order to achieve the functions of the battery entering/exiting the battery storage device 2 and exchanging the battery with the battery transfer device 3. Of course, the battery rack units 21 may also be implemented by splicing an integral frame to improve the overall stability of the battery storage device 2.

As shown in Figs. 1, 5 and 6, in a possible embodiment, the battery swap platform 1 is provided with a first positioning mechanism 13 (not shown) capable of positioning the electric vehicle in a forward/backward direction and a second positioning mechanism for positioning the electric vehicle in a width direction. The first positioning mechanism 13 comprises two sets of V-shaped rollers 131 and two sets of I-shaped rollers 132. The two sets of V-shaped rollers 131 enable front/rear wheels of the vehicle to be embedded therein so as to complete the positioning of the electric vehicle in the forward/backward direction, and the sets of V-shaped rollers 131 also allow the front/rear wheels of the vehicle to move along the width direction of the electric vehicle. The two sets of I-shaped rollers 132 accordingly allow the rear/front wheels of the electric vehicle to be supported thereon and move along the width direction of the electric vehicle. The second positioning mechanism comprises a front wheel centring push/pull rod 141 and a rear wheel centring push/pull rod 141. The front wheel centring push/pull rod 141 and the rear wheel centring push/pull rod 141 can position the electric vehicle in the width direction by pushing/pulling the wheels of the electric vehicle. Of course, the form and number of the first positioning mechanisms 13 and the second positioning mechanisms are not invariable, and those skilled in the art may also adopt other position adjustment devices to position the electric vehicle without departing from the principles of the invention, as long as the positioning devices are able to position the electric vehicle on the battery swap platform 1.

Referring to Figs. 1, 7, 8 and 9, in a possible embodiment, the battery swap trolley 4 comprises a body 41, and a walking unit (not shown), a second battery transfer unit 42 and a locking/unlocking unit which are provided on the body 41. The walking unit can drive the battery swap trolley 4 to move, the second battery transfer unit 42 is configured to move the battery relative to the body 41, and the locking/unlocking unit is configured to swap the battery for the vehicle at a battery swap position. For example, the walking unit may be a roller wheel, a rail wheel, a steering wheel, etc. Correspondingly, a track rail adapted to the above walking unit is also laid between the area below the battery swap platform 1 and the battery transfer device 3, and the walking unit can drive the battery swap trolley 4 to move on the track rail to reach the position where the battery swap trolley docks with the battery transfer device 3 and the position where the battery is swapped for the vehicle. The second battery transfer unit 42 comprises a third driving mechanism (not shown) and a third transmission mechanism 421. The third driving mechanism can drive the third transmission mechanism 421 to move, and the third transmission mechanism 421 can carry the battery. The locking/unlocking unit of the battery swap trolley 4 may comprise a hoisting mechanism 432 and a plurality of locking/unlocking mechanisms 433. The hoisting mechanism 432 can hoist the locking/unlocking mechanisms 433 to the battery swap position, and the locking/unlocking mechanisms 433 can perform locking and unlocking operations on the battery at the battery swap position. For example, the third driving mechanism is a servo motor, the third transmission mechanism 421 is a set of rollers, and the locking/unlocking mechanism 433 is a driving motor and a locking/unlocking head (such as an internal hexagon lock head) provided on an output shaft of the driving motor. The plurality of locking/unlocking mechanisms 433 may be fixed to a bottom plate 431 to ensure the relative position between each other. The hoisting mechanism 432 may use a cylinder or a servo motor to cooperate with a scissor-type driving frame, a guide rail, a sliding platform, a cam mechanism or a rigid chain to hoist the bottom plate 431 and the battery and the locking/unlocking mechanisms 433 on the bottom plate 431. Further referring to Figs. 8 and 9, the entire bottom plate 431 may also be embedded into a plurality of sets of rollers by means of digging holes, so as to further compress the longitudinal space of the battery swap trolley 4, such that the battery swap trolley 4 can smoothly enter the bottom of the vehicle. The battery swap position may be a position where the locking/unlocking mechanism 433 can lock/unlock the battery, for example a position where the locking/unlocking mechanism 433 removes the used battery or installs the fresh battery simply by being driven by the driving motor after the locking/unlocking mechanism 433 is aligned with a chassis of the electric vehicle via the hoisting mechanism 432.

Still further, to improve the positioning accuracy of the locking/unlocking mechanism 433, it is also possible to provide some positioning pins on the bottom plate 431, and the chassis of the electric vehicle is correspondingly provided with positioning holes. By plugging the positioning pins into the positioning holes, the positioning accuracy of the locking/unlocking mechanism 433 is ensured.

Referring back to Fig. 5, to enable the battery swap trolley 4 to swap the traction battery for the vehicle, a battery swap port 11 is also provided on battery swap platform 1, and hoisting mechanism 432 of battery swap trolley 4 can hoist the locking/unlock mechanisms 433 to the battery swap position. The battery swap port 11 is provided with a closable door 12. The closable door 12 can be opened before the hoisting mechanism 432 hoists the locking/unlock mechanisms 433 to the battery swap position, and is closed after the battery swapping ends, so as to improve the safety of the battery swap platform 1, thereby avoiding accidents caused by a user or a staff accidentally falling into the battery swap port 11.

As mentioned above, compared to the arrangement in which the transporting and swapping of the battery are performed in the case of lifting the vehicle in the prior art, the invention can complete the battery swapping of the electric vehicle without lifting same, reduces the number of battery swap steps, improves the battery swap efficiency and the users' battery swap experience by means of the arrangement in which the battery swap platform 1 is erected by providing the frame structure 5 in the battery charging and swapping station, in turn the battery swap trolley 4 can reach the battery swap position when being hoisted by a lifting unit, and the battery transfer device 3 is provided with two tiers of first transfer units. It can also be seen from the above description that the transport device has a simple structure and is easy to implement, the invention also improves the reliability and stability of the battery charging and swapping station, greatly reduces the construction cost and facilitates large-scale promotion and application.

Of course, the above embodiments are not unique, and any adjustment made in forms should fall within the scope of protection of the invention without departing from the principles of the invention. For example, to improve the stability of the battery swap trolley 4 and avoid the unstable situation of the battery swap trolley due to the excessive hosting height of the hoisting mechanism 432, in a possible embodiment, a trolley lifting unit may also be provided in the area below the swap platform 1. The lifting unit is configured to enable the battery swap trolley 4 parked thereon to ascend/descend, and in turn, when ascending, the battery swap trolley 4 can pass through the battery swap port 11 where the closable door 12 is opened, to reach the battery swap position. Specifically, the trolley lifting unit may comprise a sixth driving mechanism, a sixth transmission mechanism, and a lifting platform. The sixth driving mechanism can drive the sixth transmission mechanism to ascend/descend, the sixth transmission mechanism is connected to the lifting platform, and the lifting platform allows the battery swap trolley 4 to be parked thereon. For example, a track rail may be provided on the lifting platform, such that the battery swap trolley 4 can be directly parked on the lifting platform via the track rail.

In the following, referring to Figs. 5, 7 and 10, in a more preferred embodiment, to improve the battery swap accuracy, a levelling unit 15 may also be provided in the area below the battery swap platform 1. The levelling unit 15 is configured to adjust a degree of parallelism between the vehicle and the battery swap platform 1 so as to keep the locking/unlocking mechanism 433 parallel to the bottom of the vehicle and improving the battery swap accuracy of the locking/unlocking mechanism 433. The levelling unit further comprises a plurality of fifth driving mechanisms 151 and a plurality of fifth transmission mechanisms 152 provided in the area below the battery swap platform, wherein each of the fifth driving mechanisms 151 can drive the corresponding fifth transmission mechanism 152 to ascend/descend, and the fifth transmission mechanism 152 can extend out of the battery swap port and abut against the chassis of the vehicle. In the implementation, the levelling unit 15 may be implemented by using a motor, an electric cylinder, an air cylinder etc. as a driving power and using a vertical slide rail, a cam mechanism, a rigid chain, a lead screw, a gear, etc. as a transmission device. Referring to Fig. 10, in a possible embodiment, the levelling unit 15 may be implemented by using four servo motors as driving forces, each servo motor driving a sliding platform assembly, wherein the sliding platform assembly comprises a sliding platform and levelling rods. During levelling, the motor drives the sliding platform to move up and down, and the levelling rod fixedly connected to the sliding platform can extend out of the battery swap port 11 and abut against the chassis of the vehicle. The four levelling rods extend from four corners of the battery swap port 11 to complete the levelling of the electric vehicle. It should be noted that the purpose of providing the levelling unit 15 here is to adjust the degree of parallelism of the vehicle in order to improve the battery swap accuracy, and is not intended to greatly raise the vehicle. That is to say, in an ideal state, the levelling unit 15 enables the levelling of the vehicle when the vehicle just keeps in contact with the set of V-shaped rollers 131 and the set of I-shaped rollers 132. Tn this case, the user can still sit in the vehicle while performing the battery swapping.

A possible battery swap process of the battery charging and swapping station of the invention will be described briefly with reference to Figs. 1 to 10.

In a possible embodiment, a complete battery swap process of a battery charging and swapping station of the invention may be as follows. A driver drives an electric vehicle into a battery swap platform 1, and the positioning of the electric vehicle is completed under the constraints of a first positioning mechanism 13 and a second positioning mechanism. Next, a closable door 12 is opened during the adjustment of the first positioning mechanism 13 and the second positioning mechanism. Next, motors drive sliding platforms to ascend, and levelling rods extend from a battery swap port 11 to level the vehicle. Next, a battery swap trolley 4 arrives at the projection position of a battery swap position. Next, a hoisting mechanism 432 hoists a locking/unlocking mechanism 433 from the initial position to the battery swap position. Next, the locking/unlocking mechanism 433 removes a used battery, and the used battery falls onto a bottom plate 431 of a locking/unlocking unit. Next, the hoisting mechanism 432 lowers the locking/unlocking mechanism 433 to the initial position, and the battery falls onto a set of rollers of a second battery transfer unit 42. Next, the battery swap trolley 4 moves to and docks with a battery transfer device 3. Next, an upper first battery transfer unit 32 of the battery transfer device 3 receives the used battery. Next, after the first battery transfer unit 32 receives the used battery, a battery lifting unit 31 raises two first battery transfer units 32 simultaneously, and the lower first battery transfer unit 32 then docks with the battery transfer unit. Next, the lower first battery transfer unit 32 transfers a stored flesh battery to the battery swap trolley 4. Next, the battery swap trolley 4 reaches the projection position of the battery swap position again. Next, the hoisting mechanism 432 hoists the locking/unlocking mechanism 433 to the battery swap position again. Next, the locking/unlocking mechanism 433 installs the fresh battery to the electric vehicle. Next, the hoisting mechanism 432 lowers the locking/unlocking mechanism 433 to the initial position. Next, the second positioning mechanism moves in the opposite direction, to cancel the restrictions on tires of the vehicle, at the same time, the motors drive the levelling rods to fall below the battery swap port 11. Next, the closable door 12 is closed, the driver drives the electric vehicle out of the battery charging and swapping station, and at the same time, the battery transfer device 3 transfers the used battery to the battery storage device 2, and receives a fresh battery.

Of course, the above description of the battery swap process is only to illustrate the working principle of the invention, and is not intended to limit the scope of protection of the invention. Those skilled in the art can adjust the above procedures or the sequence of actions of the mechanisms such that the invention can be applied to more specific application scenarios without departing from the principles of the invention. For example, after the fresh battery is installed on the electric vehicle by the locking/unlocking mechanism, the translation of the locking/unlocking unit to the original position by a translation unit 23 and the lowering of the locking/unlocking mechanism by the hoisting mechanism may also be performed at the same time. As another example, when the battery swap station 4 exchanges the battery with the battery transfer device 3, it is also possible for the lower first battery transfer unit 32 of the battery transfer device 3 to first receive the used battery before the upper first battery transfer unit 32 transfers the fresh battery to the battery swap trolley 4.

Heretofore, the technical solutions of the invention have been described with reference to the preferred embodiments shown in the accompanying drawings; however, those skilled in the art can readily understand that the scope of protection of the invention is obviously not limited to these particular embodiments. Those skilled in the art can make equivalent changes or substitutions to the related technical features without departing from the principles of the invention, and all the technical solutions after the changes or substitutions will fall within the scope of protection of the invention.

## Claims

1. A battery charging and swapping station, **characterized by** comprising a battery swap platform, a battery storage device, a battery transfer device and a battery swap trolley, wherein
the battery swap platform is erected on the ground where the battery charging and swapping station is located, and the battery swap platform is configured to position a vehicle parked thereon;
the battery storage device stores a plurality of batteries, and the battery storage device is configured to dock with and exchange a battery with the battery transfer device;
the battery transfer device is configured to dock with the battery swap trolley, and to transfer a fresh battery to the battery swap trolley after receiving a used battery from the battery swap trolley; and
the battery swap trolley is configured to carry a battery to move between an area below the battery swap platform and the battery transfer device, and to swap a battery for the vehicle in the area below the battery swap platform.

2. The battery charging and swapping station according to claim 1, **characterized in that** the battery transfer device comprises a battery lifting unit and two first battery transfer units, wherein the battery lifting unit is configured to enable the at least one first battery transfer unit to ascend/descend, and the two first battery transfer units are configured such that while or after one of the first battery transfer units receives/transfers the used battery, the other of the first battery transfer units is able to correspondingly transfer/receive the fresh battery.

3. The battery charging and swapping station according to claim 2, **characterized in that** the battery lifting unit comprises a first driving mechanism and a first transmission mechanism, wherein the first driving mechanism is able to drive the first transmission mechanism to ascend/descend, and the first transmission mechanism is connected to the at least one first battery transfer unit.

4. The battery charging and swapping station according to claim 3, **characterized in that** the first battery transfer unit comprises a second driving mechanism and a second transmission mechanism, wherein the second driving mechanism is able to drive the second transmission mechanism to move, and the second transmission mechanism is able to carry the battery.

5. The battery charging and swapping station according to claim 3, **characterized in that** the battery swap trolley comprises a body, and a second battery transfer unit and a locking/unlocking unit provided on the body, wherein the second battery transfer unit is configured to move the battery relative to the body, and the locking/unlocking unit is configured to swap the battery for the vehicle at a battery swap position.

6. The battery charging and swapping station according to claim 5, **characterized in that** the second battery transfer unit comprises a third driving mechanism and a third transmission mechanism, wherein the third driving mechanism is able to drive the third transmission mechanism to move, and the third transmission mechanism is able to carry the battery.

7. The battery charging and swapping station according to claim 5, **characterized in that** the locking/unlocking unit comprises a hoisting mechanism and a locking/unlocking mechanism, wherein the hoisting mechanism is able to hoist the locking/unlocking mechanism to the battery swap position, and the locking/unlocking mechanism is able to lock/unlock the battery at the battery swap position.

8. The battery charging and swapping station according to claim 5, **characterized in that** the battery swap trolley is further provided with a walking unit, a track rail is laid between the area below the battery swap platform and the battery transfer device, and the walking unit is configured to drive the battery swap trolley to move on the track rail.

9. The battery charging and swapping station according to claim 5, **characterized in that** the battery swap platform is provided with a battery swap port configured to allow the locking/unlocking unit of the battery swap trolley to pass therethrough and reach the battery swap position.

10. The battery charging and swapping station according to claim 9, **characterized in that** a closable door is further provided at the battery swap port, and the closable door is configured to be opened before the battery swap trolley reaches the battery swap position.

11. The battery charging and swapping station according to claim 9, **characterized in that** the battery swap platform is provided with a first positioning mechanism and a second positioning mechanism, wherein the first positioning mechanism enables the vehicle to be positioned in a forward/backward direction, and the second positioning mechanism enables the vehicle to be positioned in a width direction.

12. The battery charging and swapping station according to claim 11, **characterized in that** the first positioning mechanism comprises a set of V-shaped rollers and a set of I-shaped rollers, wherein the set of V-shaped rollers enables front/rear wheels of the vehicle to be embedded therein, and the set of V-shaped rollers allows the front/rear wheels of the vehicle to move in the width direction of the vehicle; and the set of I-shaped rollers respectively allows the rear/front wheels of the vehicle to be supported thereon and to move in the width direction of the vehicle.

13. The battery charging and swapping station according to claim 11, **characterized in that** the second positioning mechanism comprises a front wheel centring push/pull rod and/or a rear wheel centring push/pull rod, wherein the front wheel centring push/pull rod and/or the rear wheel centring push/pull rod enable the vehicle to be positioned in the width direction of the vehicle by means of pushing/pulling the front/rear wheels of the vehicle.

14. The battery charging and swapping station according to claim 11, **characterized in that** the battery storage device further comprise a plurality of battery rack units, wherein each of the battery rack units is provided with a third battery transfer unit, and the third battery transfer unit is configured to enable the battery to enter/exit the battery rack unit.

15. The battery charging and swapping station according to claim 14, **characterized in that** the third battery transfer unit comprises a fourth driving mechanism and a fourth transmission mechanism, wherein the fourth driving mechanism is able to drive the fourth transmission mechanism to move, and the fourth transmission mechanism is able to carry the battery.

16. The battery charging and swapping station according to any one of claims 1 to 15, **characterized in that** the battery swap platform is further provided with a levelling unit configured to adjust a degree of parallelism between the vehicle and the battery swap platform.

17. The battery charging and swapping station according to claim 16 when referring to any one of claims 9 to 15, **characterized in that** the levelling unit comprises a plurality of fifth driving mechanisms and a plurality of fifth transmission mechanisms provided in the area below the battery swap platform, wherein each of the fifth driving mechanisms is able to drive the corresponding fifth transmission mechanism to ascend/descend, and the fifth transmission mechanism is able to extend out of the battery swap port and abut against a chassis of the vehicle.
